# EUROPEAN PATENT APPLICATION

(11) **EP 3 712 580 A1**
(43) Date of publication of application: **23.09.2020**
(21) Application number: 19211233.2
(22) Date of filing: 25.11.2019
(51) Int. Cl.: G01J 5/06, F25B 9/00, F25D 29/00, F25B 49/00

(54) **DIAGNOSTIC CLOSED CYCLE COOLER CONTROLLER AND IMAGING SYSTEM**

(30) Priority: 18.03.2019 US 201916357022
(71) Applicant: Goodrich Corporation, Charlotte, NC 28217-4578 (US)
(72) Inventor: LANDRY, Joseph W., North Readin, MA Massachusetts 01864 (US)
(74) Representative: Dehns

(57) **Abstract**

A dewar cooler control module (100) can include a cooldown module (101) configured to receive sensor signals from one or more temperature sensors (103) of an imaging assembly (105) having a dewar cooler system (107), receive a time from a clock module (100), and determine a cooldown time to a predetermined temperature to output a cooldown time, wherein the cooldown module (101) is configured to output the cooldown time for determining a health of the dewar cooler system (107) and/or component thereof. The cooldown module (101) can be configured to send a command to a cooler of the dewar cooler system (107) to cause the cooler to provide maximum cooling to a dewar (111) of the dewar cooler system (107).

## Description

### BACKGROUND

### 1. Field

This disclosure relates to imaging systems, e.g., to cooler controllers for imaging devices.

### 2. Description of Related Art

Infrared imaging systems typically employ a cryogenic cooler in order to cool the focal plane array (FPA) to operating temperatures. The cooler typically limits the mean time to failure (MTTF) of the camera. Coolers usually employ mechanical bearings which eventually fail. As the bearings start to fail the cooler can start to export vibration to the FPA which could result in diminished imaging performance due to jitter. Further, the evacuated dewar that house the infrared focal plane array can develop vacuum leaks or experience outgassing of internal components. If the vacuum degrades, the heat load of the dewar increases and the cooler takes more power to cool down or increases its cooldown time.

Such conventional methods and systems have generally been considered satisfactory for their intended purpose. However, there is still a need in the art for improved cooler controllers and systems. The present disclosure provides one or more solutions for this need.

### SUMMARY

A dewar cooler control module can include a cooldown module configured to receive sensor signals from one or more temperature sensors of an imaging assembly having a dewar cooler system, receive a time from a clock module, and determine a cooldown time to a predetermined temperature to output a cooldown time, wherein the cooldown module is configured to output the cooldown time for determining a health of the dewar cooler system and/or component thereof. The cooldown module can be configured to send a command to a cooler of the dewar cooler system to cause the cooler to provide maximum cooling to a dewar of the dewar cooler system.

For example, the cooldown module can be configured to control a power supply of the dewar cooler system. The control module can include a health monitoring module configured to receive cooldown time from the cooldown module and to determine a health of the dewar cooler system as a function of cooldown time.

In certain embodiments, the control module can include a vibration monitoring module configured to receive vibration sensor signals from one or more vibration sensors in one or more locations of the imaging assembly. In certain embodiments, the health monitoring module can be configured to determine a health of the dewar cooler system based on output from the vibration monitoring module. The one or more vibration sensors can include at least one sensor within a dewar, at least one sensor on an outside of the dewar, and/or at least one sensor attached to an imaging device.

In accordance with at least one aspect of this disclosure, an imaging system can include an imaging assembly having an imaging device and a dewar cooler system attached to the imaging device to cool the imaging device. The dewar cooler system can have a dewar, a cooler, and one or more temperature sensors. The imaging system can include a dewar cooler control module operatively connected to the cooler of the dewar cooler system to control the cooler. The dewar cooler control module can include any suitable embodiment of a control module as disclosed herein (e.g., described above). In certain embodiments, the system can include one or more vibration sensors as disclosed herein (e.g., as described above).

In accordance with at least one aspect of this disclosure, a method can include receiving sensor signals from one or more temperature sensors of an imaging assembly having a dewar cooler system, receiving a time from a clock module, determining a cooldown time to a predetermined temperature to output a cooldown time, outputting the cooldown time, and determining a health of the dewar cooler system and/or component thereof based on the cooldown time. The method can include sending a command to a cooler of the dewar cooler system to cause the cooler to provide maximum cooling to a dewar of the dewar cooler system.

For example, the method can include controlling a power supply of the dewar cooler system based on the command. In certain embodiments, the method can include receiving vibration sensor signals from one or more vibration sensors in one or more locations of the imaging assembly and determining a health of the dewar cooler system and/or a component thereof based on the vibration sensor signals. The method can include any other suitable methods and/or portions thereof.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

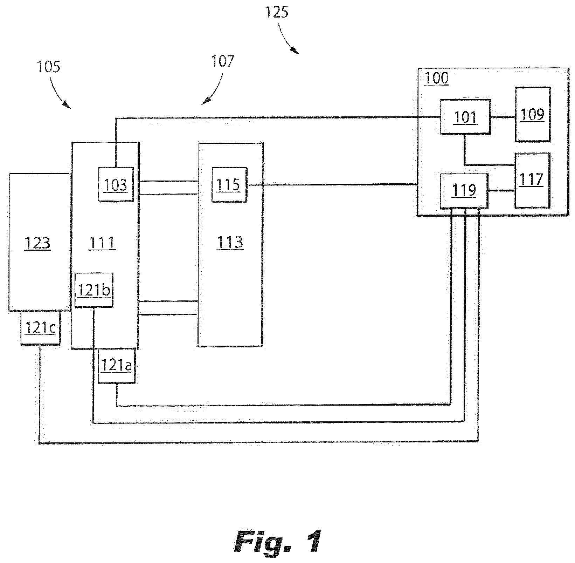

Fig. 1 is a schematic view of an embodiment of a system in accordance with this disclosure.

### DETAILED DESCRIPTION

Reference will now be made to the drawings wherein like reference numerals identify similar structural features or aspects of the subject disclosure. For purposes of explanation and illustration, and not limitation, an illustrative view of an embodiment of a dewar cooler module in accordance with the disclosure is shown in Fig. 1 and is designated generally by reference character 100. Certain embodiments described herein can be used to monitor health of a dewar cooler system, for example.

Referring to Fig. 1, a dewar cooler control module 100 can include a cooldown module 101 configured to receive sensor signals from one or more temperature sensors 103 of an imaging assembly 105 having a dewar cooler system 107. The cooldown module 101 can be configured to receive a time from a clock module 109 and to determine a cooldown time to a predetermined temperature to output a cooldown time. The cooldown module 101 can be configured to output the cooldown time for determining a health of the dewar cooler system 107 and/or component thereof (e.g., a dewar 111 and/or cooler 113).

The cooldown module 101 can be configured to send a command to a cooler 113 of the dewar cooler system 107 to cause the cooler 113 to provide maximum cooling to a dewar 111 of the dewar cooler system 107. The cooler 113 can include a power supply 115 configured to power the cooler 113 and to be controlled by the control module 100. The cooldown module 101 can be configured to control the power supply 115 of the dewar cooler system 107 to control the power to the cooler 113 to control temperature of the dewar 111.

In certain embodiments, the control module 100 can include a health monitoring module 117 configured to receive cooldown time from the cooldown module 101 and to determine a health of the dewar cooler system 107 as a function of cooldown time. In certain embodiments, the control module 100 may be configured to store cooldown time data and/or health data for output to a user device for external health monitoring. In certain embodiments, the control module 100 (e.g., the health monitoring module 117 can be configured to output an alert if the health of the dewar cooler system 107 is determined to be below a predetermined standard (e.g., such that the cooldown time is not fast enough).

In certain embodiments, the control module 100 can include a vibration monitoring module 119 configured to receive vibration sensor signals from one or more vibration sensors 121a, b, c in one or more locations of the imaging assembly 105. The vibration monitoring module 119 can be configured to process sensor signals and output vibration data, for example.

In certain embodiments, the health monitoring module 117 can be operatively connected to the vibration monitoring module 119. The health monitoring module 117 can be additionally or alternatively configured to determine a health of the dewar cooler system 107 based on output from the vibration monitoring module 119. The one or more vibration sensors 121a, b, c can include at least one sensor 121b within a dewar (e.g., to sense vibration from the cooler 113), at least one sensor 121a on an outside of the dewar 111 (to sense external vibration seen be the dewar 111), and/or at least one sensor 121c attached to an imaging device 123 (e.g., a focal plane array (FPA)). The vibration monitoring module 119 may be configured to output vibration data to an imaging module for processing images as a function of vibrations (e.g., for removing distortion from images due to vibrations).

As disclosed herein (e.g., above), each module disclosed herein can include any suitable hardware and/or software configured to perform the respective disclosed function. In certain embodiments, one or more modules can be standalone modules and/or integrated with one or more other modules. Any suitable delineation of modules (e.g., such as modules of the control module) is contemplated herein. It is contemplated that the control module 100 can be integrated with the dewar cooler system 107 (e.g., within the cooler 113) or can be separate and connectable to the dewar cooler system 107. The control module 100 can include any suitable memory for storing data (e.g., cooldown time data, health data from the health monitoring module).

In accordance with at least one aspect of this disclosure, an imaging system 125 can include an imaging assembly 105 having an imaging device 123 (e.g., an FPA or any other suitable imaging device) and a dewar cooler system 107 attached to the imaging device 123 to cool the imaging device 123. The dewar cooler system 107 can have a dewar 111, a cooler 113, and one or more temperature sensors 103 (in any suitable location, e.g., within the dewar for example). The imaging system 105 can include a dewar cooler control module (e.g., module 100 as disclosed above) operatively connected to the cooler 113 of the dewar cooler system 107 to control the cooler 113. The dewar cooler control module can include any suitable embodiment of a control module as disclosed herein (e.g., described above). In certain embodiments, the system 125 can include one or more vibration sensors 121a, b, c as disclosed herein (e.g., as described above).

In accordance with at least one aspect of this disclosure, a method can include receiving sensor signals from one or more temperature sensors of an imaging assembly having a dewar cooler system, receiving a time from a clock module, determining a cooldown time to a predetermined temperature to output a cooldown time, outputting the cooldown time, and determining a health of the dewar cooler system and/or component thereof based on the cooldown time. The method can include sending a command to a cooler of the dewar cooler system to cause the cooler to provide maximum cooling to a dewar of the dewar cooler system.

For example, the method can include controlling a power supply of the dewar cooler system based on the command. In certain embodiments, the method can include receiving vibration sensor signals from one or more vibration sensors in one or more locations of the imaging assembly and determining a health of the dewar cooler system and/or a component thereof based on the vibration sensor signals. The method can include any other suitable methods and/or portions thereof.

Embodiments include an integrated cooldown time test module in a control module that can closed loop control power output to cooler as a function of sensed temperature, for example. Embodiments include one or more vibration sensors (e.g., an accelerometer) to provide continuous vibration monitoring and/or processing intelligence locally on the FPA cooler controller. One or more vibration sensors can also allow detection of when the cooler is vibrating whereas existing systems are not capable of discerning a location of vibration source.

Embodiments include a diagnostic closed cycle cooler controller. As appreciated by those having ordinary skill in the art in view of this disclosure, the basic premise of a closed cycle cooler controller is to regulate the temperature of a detector by varying the voltage, current and frequency of the power driving a closed cycle cooler. In embodiments, a temperature sensor can be used to close a control loop and maintain the detector temperature. Embodiments can monitor the voltage and current through an internal A/D convertor and microcontroller (e.g., in controller 100 and/or power source 115) and can output the data. Embodiments can record cooldown and warm up times, for example. Recording cooldown and warmup times can allow monitoring the health of the cooler and dewar.

Certain embodiments of a cooler control module can record the voltage, current, cooldown time and warmup time, and the health status can be stored locally with the cooler controller and long term trends can be monitored including during standalone testing of the FPA or if the FPA gets swapped into a different payload, for example. Certain embodiments having vibration sensors (e.g., a 3 axis accelerometer) allow for local monitoring of both internal and externally generated vibration, which can be used to monitor cooler and fan bearing vibration as a way of checking health and status of these mechanical devices. An accelerometer mounted on the focal plane motherboard could monitor any vibrations translated to the FPA, and can be exported for use in image processing to remove distortion. Another external accelerometer could monitor bearing vibrations and be used for predictions of health and ultimately cooler life, for example.

The continual monitoring and recording of vibration profiles and cooldown and warm up times can serve as a prognosticator of the health of the system. Embodiments can provide prognostics and health monitoring for the most vulnerable component of an infrared imaging system, for example.

As will be appreciated by those skilled in the art, aspects of the present disclosure may be embodied as a system, method, or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

Any suitable combination(s) of any disclosed embodiments and/or any suitable portion(s) thereof are contemplated herein as appreciated by those having ordinary skill in the art.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure.

## Claims

1. A dewar cooler control module (100), comprising:
a cooldown module (101) configured to:
receive sensor signals from one or more temperature sensors (103) of an imaging assembly (105) having a dewar cooler system (107);
receive a time from a clock module (109); and
determine a cooldown time to a predetermined temperature to output a cooldown time, wherein the cooldown module (101) is configured to output the cooldown time for determining a health of the dewar cooler system (107) and/or component thereof.

2. The control module of claim 1, wherein the cooldown module (101) is configured to send a command to a cooler of the dewar cooler system (107) to cause the cooler to provide maximum cooling to a dewar (111) of the dewar cooler system (107).

3. The control module of claim 2, wherein the cooldown module (101) is configured to control a power supply of the dewar cooler system (107).

4. The control module of any preceding claim, further comprising a health monitoring module (117) configured to receive cooldown time from the cooldown module (101) and to determine a health of the dewar cooler system (107) as a function of cooldown time.

5. The control module of any preceding claim, further comprising a vibration monitoring module (119) configured to receive vibration sensor signals from one or more vibration sensors (121a, b, c) in one or more locations of the imaging assembly (105).

6. The control module of claim 4, further comprising a health monitoring module (117) configured to determine a health of the dewar cooler system based on output from the vibration monitoring module.

7. The control module of any preceding claim, wherein the one or more vibration sensors (12a, b, c) include at least one sensor within a dewar, at least one sensor on an outside of the dewar, and/or at least one sensor attached to an imaging device.

8. An imaging system, comprising:
an imaging assembly (105), comprising:
an imaging device; and
a dewar cooler system (107) attached to the imaging device to cool the imaging device, having a dewar (111), a cooler, and one or more temperature sensors (103); and
a dewar cooler control module as claimed in any preceding claim operatively connected to the cooler of the dewar cooler system to control the cooler.

9. A method, comprising:
receiving sensor signals from one or more temperature sensors of an imaging assembly having a dewar cooler system;
receiving a time from a clock module;
determining a cooldown time to a predetermined temperature to output a cooldown time;
outputting the cooldown time; and
determining a health of the dewar cooler system and/or component thereof based on the cooldown time.

10. The method of claim 9, further comprising sending a command to a cooler of the dewar cooler system to cause the cooler to provide maximum cooling to a dewar of the dewar cooler system.

11. The method of claim 10, further comprising controlling a power supply of the dewar cooler system based on the command.

12. The method of any of claims 9-11, further comprising receiving vibration sensor signals from one or more vibration sensors in one or more locations of the imaging assembly and determining a health of the dewar cooler system and/or a component thereof based on the vibration sensor signals.
